Europäisches Patentamt

(19) European Patent Office

Office européen des brevets

(11) Numéro de publication : **0 014 122**
**B1**

(12) **FASCICULE DE BREVET EUROPÉEN**

(45) Date de publication du fascicule du brevet :
07.04.82

(21) Numéro de dépôt : **80400047.9**

(22) Date de dépôt : **14.01.80**

(51) Int. Cl.³ : **B 62 D 11/18**

(54) **Dispositif de direction hydromécanique par dérapage.**

(30) Priorité : 16.01.79 FR 7900923

(43) Date de publication de la demande :
06.08.80 (Bulletin 80/16)

(45) Mention de la délivrance du brevet :
07.04.82 Bulletin 82/14

(84) Etats contractants désignés :
DE

(56) Documents cités :
DE - A - 1 929 380
US - A - 3 373 636
US - A - 3 575 066
INGENIEURS DE L'AUTOMOBILE
N° 1, Janvier 1979,
M.P. LEBOIME « Techniques des transmissions
des véhicules chenillés rapides »,
pages 28-35

(73) Titulaire : **ETAT-FRANCAIS représenté par le DELE-
GUE GENERAL POUR L'ARMEMENT**
**Bureau des Brevets et Inventions de la Délégation
Générale pour l'Armement 14, rue Saint-Dominique
F-75997 Paris Armées (FR)**

(72) Inventeur : **Heissler, Roger
4, rue des Libellules La Jubaudière
F-49000 Jallais (FR)**

Imprimerie Jouve, 18, rue St-Denis, 75001 Paris, France

Dispositif de direction hydromécanique par dérapage

La présente invention concerne le domaine technique des dispositifs de direction pour véhicules et plus particulièrement pour véhicules à chenilles ou à roues non orientables, véhicules tels que des engins de travaux publics ou des chars de combat.

Un problème important posé par les véhicules à chenilles ou à roues non orientables est d'obtenir en virage une variation continue des rayons de braquage.

Pour résoudre ce problème, des solutions ont été proposées. Ainsi on a utilisé des dispositifs de direction hydrostatiques qui lui apportent une solution satisfaisante pour des véhicules ne nécessitant pas une forte puissance de direction.

Pour des puissances de virages élevées, on peut alors envisager d'augmenter le nombre des composants hydrostatiques utilisés. Cette solution entièrement hydrostatique, techniquement possible, grève cependant le véhicule d'un encombrement et d'un poids supplémentaires excessifs et incompatibles avec les exigences globales de masse et d'encombrement de celui-ci.

Une autre solution consiste à ajouter à la direction hydrostatique des dispositifs hydrocinétiques ou purement mécaniques que l'on ne met en œuvre que dans les cas d'utilisation les plus difficiles.

Cette solution permet de limiter la fraction de puissance qui transite par les éléments hydrauliques, la puissance supplémentaire nécessaire au virage étant apportée par les éléments mécaniques ou hydrocinétiques.

Dans certains cas, cette disposition impose l'emploi de dispositifs de couplage tels que des embrayages ou des crabotages pour permettre le groupement temporaire de ces divers éléments lorsqu'il est nécessaire d'utiliser la totalité de la puissance disponible, par exemple dans le cas de rayons courts de virage pour lesquels la puissance nécessaire au virage est importante.

Au moment du passage d'un mode de fonctionnement à un autre, on peut alors perdre le bénéfice de la variation continue du rayon, qu'apportait l'hydrostatique.

Les dispositifs autres que les crabotages utilisent pour le couplage des divers éléments, des dispositifs à embrayage ou à frein pour réaliser le couplage « dans la foulée ». Une telle solution est utilisée dans le dispositif décrit dans la demande de brevet française n° 74.30524 et publiée sous le n° 2 284 504.

Ces dispositifs à embrayages sont rendus nécessaires par le fait que les divers éléments à coupler ont des vitesses de rotation différentes. On se rend compte immédiatement que ces dispositifs entraînent soit des glissements qui ont pour conséquence des risques d'échauffement important et d'usure, soit des à-coups. C'est le cas du dispositif divulgué dans le brevet DE-A-1929 380 qui comprend deux trains épicycloïdaux en série dont la roue centrale du premier train coopère avec une transmission hydrostatique. Dans ce dispositif, on désaccouple un frein pendant qu'un embrayage est serré, ce qui implique un défaut de synchronisme dans l'enclenchement du dispositif et impose de ramener à zéro la cylindrée des moteurs de la transmission hydrostatique pour éviter des à-coups de fonctionnement avant de l'augmenter à nouveau.

Le dispositif selon l'invention a pour but de fournir une solution continue au problème de variation des rayons de braquage du véhicule, tout en évitant les inconvénients précités.

L'invention a donc pour objet un dispositif de direction hydromécanique pour véhicules à chenilles ou à roues non orientables permettant, en charge, le passage continu et sans à-coups d'un fonctionnement hydraulique à un fonctionnement hydro-mécanique, entraîné par un moteur thermique (1) relié à un premier arbre de transmission (2) commandant le sens de rotation d'une boîte de vitesses et le fonctionnement d'une transmission hydrostatique (5), dispositif comprenant un double train réducteur (14) composé de deux trains épicycloïdaux, la roue centrale (13) du premier train épicycloïdal coopérant avec le récepteur hydrostatique, le bras porte-satellite du deuxième train coopérant avec un arbre de sortie, caractérisé en ce que les deux trains épicycloïdaux sont réunis de sorte que le bras porte-satellite (respectivement 15, 18) de chacun d'eux soit relié à la couronne (respectivement 17, 20) de l'autre, en ce que la roue centrale (33) du deuxième train épicycloïdal coopère au moyen d'un dispositif à embrayage (27) avec le premier arbre de commande (2) du sens de rotation de la boîte de vitesse et en ce que l'arbre (21) portant les bras porte-satellites du premier train épicycloïdal et la couronne (17) du second train épicycloïdal est muni d'un dispositif d'immobilisation momentanée (22).

Selon une autre caractéristique, le dispositif d'immobilisation momentanée peut être constitué par deux roues libres montées en opposition de sens de blocage coopérant avec des moyens d'immobilisation.

Les moyens d'immobilisation sont alors constitués par deux freins à commande hydraulique, électromagnétique, ou mécanique.

La transmission hydrostatique du dispositif hydromécanique selon l'invention peut comporter au moins un circuit hydraulique comprenant une ou plusieurs pompes et un ou plusieurs moteurs hydrauliques, la cylindrée de chacun de ces éléments pouvant être fixe ou variable, chaque pompe étant entraînée par le premier arbre de transmission et l'arbre de sortie de chaque moteur entraînant la roue centrale du premier train épicycloïdal par l'intermédiaire d'un train à engrenages.

La variation de cylindrée de chaque élément à cylindrée variable pourra être commandée par le volant de direction du véhicule, soit directement soit au moyen de tout dispositif mécanique, électrique ou hydraulique intermédiaire.

Selon un mode de réalisation conforme aux définitions précitées, le dispositif à embrayages est composé par un arbre intermédiaire portant un pignon le reliant au premier arbre de transmission et deux ensembles de disques, et par deux récepteurs d'embrayages ces deux embrayages pouvant être commandés indépendamment l'un de l'autre, les deux arbres accouplés par le dispositif à embrayages ayant sensiblement la même vitesse de rotation au moment de l'accouplement. Chaque récepteur d'embrayage est relié à l'arbre portant la roue centrale du deuxième train épicycloïdal, le premier récepteur y étant relié par un nombre pair et le second par un nombre impair d'engrenages intermédiaires.

Selon ce même mode de réalisation, les roues libres montées en opposition sont composées de deux bagues internes disposées sur l'arbre portant les bras porte-satellites du premier train épicycloïdal et la couronne du second train épicycloïdal et de deux bagues externes coopérant avec les moyens d'immobilisation.

Un autre mode de réalisation est plus directement applicable aux véhicules nécessitant une forte puissance de direction. Selon ce mode de réalisation, la transmission hydrostatique est dédoublée, ce qui implique un arrangement différent des organes constituant le dispositif de direction. Ainsi la transmission hydrostatique comporte deux circuits hydrauliques identiques. Chacune des pompes est entraînée par le premier arbre de transmission qui porte de plus deux roues dentées et chaque moteur entraîne chacune des extrémités d'un second arbre intermédiaire qui conduit la roue centrale du premier train épicycloïdal par l'intermédiaire d'un train à engrenages.

De plus, le deuxième train épicycloïdal comporte un satellite double relié à deux roues centrales, chacune de ces roues centrales entraînant un arbre qui porte à chacune de ces extrémités un récepteur d'embrayage. L'ensemble des disques de chacun de ces embrayages est porté par un demi-arbre creux entraîné en rotation par chaque roue dentée du premier arbre de transmission, le premier et le second demi-arbre étant entraînés respectivement au moyen d'un nombre pair et d'un nombre impair d'engrenages intermédiaires.

En outre, la couronne du second train épicycloïdal coopère au moyen d'un train d'engrenages avec le dispositif d'immobilisation momentanée, ce dernier étant porté par un arbre creux concentrique avec le second arbre intermédiaire.

Selon ces deux modes de réalisation, l'arbre portant la couronne du premier train épicycloïdal entraîne dans des sens opposés les roues centrales de deux épicycles de sortie, dont les couronnes coopèrent avec la boîte de vitesses et dont les bras porte-satellites entraînent les roues motrices.

Les deux dispositifs définis précédemment ont leur premier arbre de transmission relié au moteur thermique par un inverseur et sont caractérisés en ce que la pompe de chaque transmission hydrostatique est entraînée en rotation en aval de l'inverseur de sorte que le virage du véhicule soit effectué dans le sens de rotation du volant, en marche avant, et dans le sens opposé en marche arrière, ce qui permet de conserver la même trajectoire.

L'invention sera décrite plus en détail en regard des dessins annexés à titre d'exemples nullement limitatifs de deux cas particuliers de réalisation du dispositif de direction hydromécanique selon l'invention et de leur mode de fonctionnement.

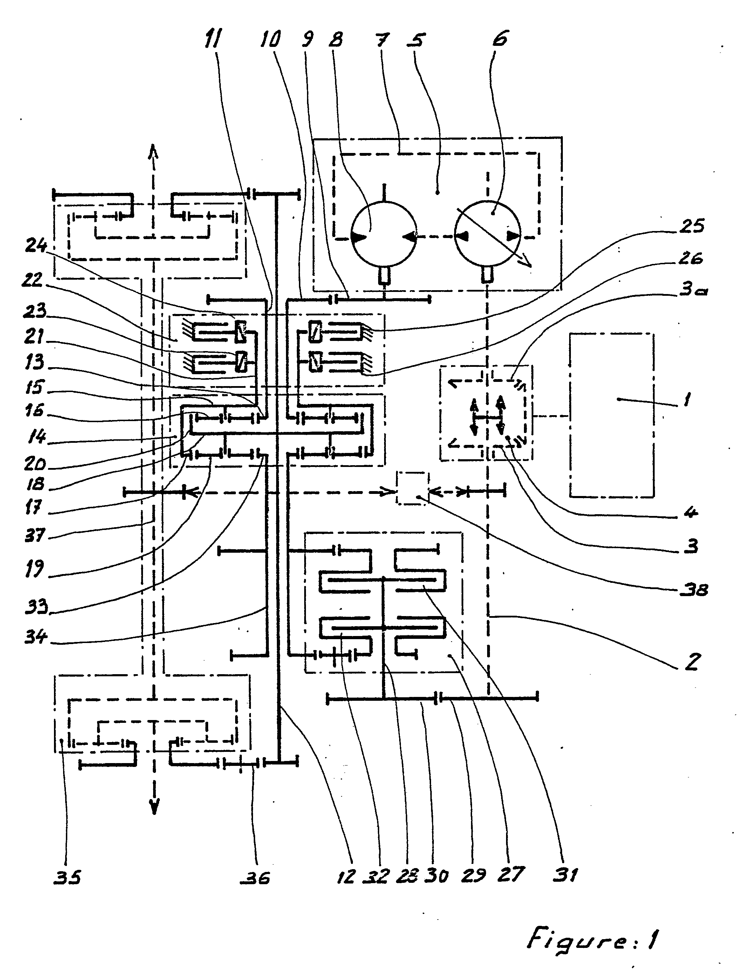

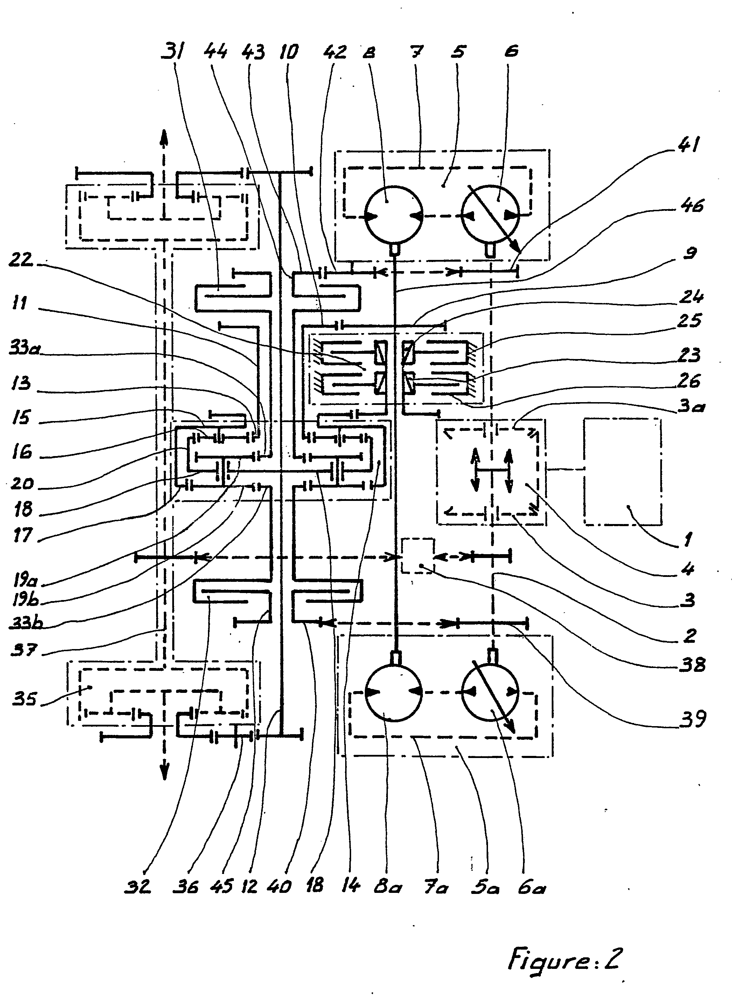

La figure 1 représente schématiquement le premier mode de réalisation brièvement décrit ci-dessus et la figure 2 le second mode de réalisation.

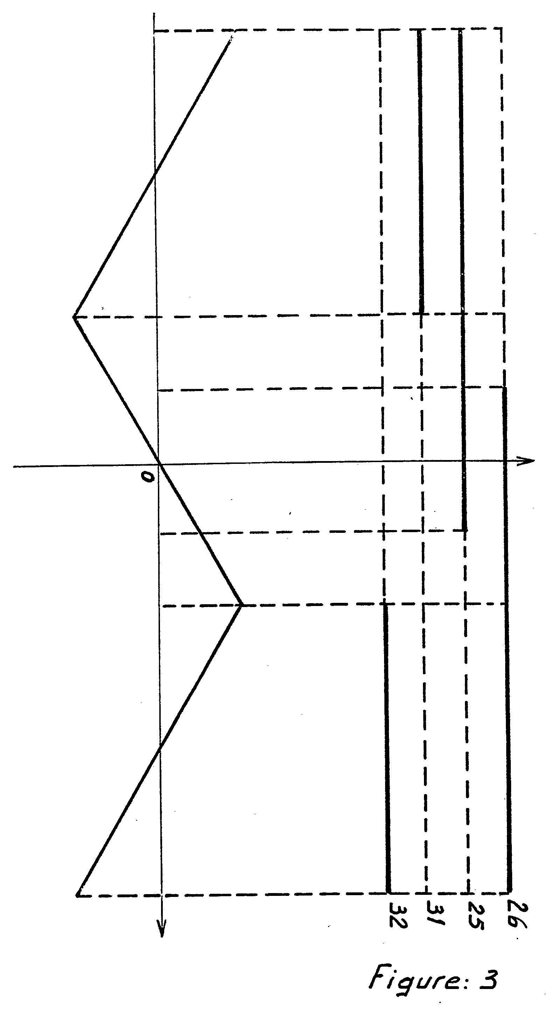

La figure 3 représente en ordonnée un exemple possible des variations de la cylindrée de la pompe de la transmission hydraulique ainsi que les plages de serrage des freins et des embrayages du dispositif en fonction de la position (en abscisse) du volant de direction de sa position médiane à sa position en butée. Une rotation à droite du volant correspondra à la partie d'abscisse positive des courbes alors qu'une rotation à gauche du volant correspondra à leur partie d'abscisse négative.

Sur la figure 1 on voit donc un dispositif de direction hydromécanique utilisé sur un véhicule comprenant un moteur thermique 1 pouvant être associé à un convertisseur de couple ou un embrayage et transmettant sa puissance à un premier arbre de transmission 2 par l'intermédiaire d'un inverseur de marche 4, comportant un double couple conique 3 et 3a.

Cet inverseur permet le passage du véhicule en marche avant ou en marche arrière suivant que le premier ou le second couple conique 3 ou 3a est en prise sur le premier arbre de transmission 2.

Le premier arbre de transmission entraîne à une de ses extrémités la rotation de la pompe à cylindrée variable 6 d'une transmission hydraulique 5. Celle-ci est formée également d'un circuit hydraulique 7 qui permet à la pompe 6 de débiter dans un moteur hydraulique 8. Ce dernier entraîne la roue centrale 13 du premier train épicycloïdal, au moyen d'un train d'engrenages ici représenté par les engrenages 9 et 10. Ce dernier train est disposé à une extrémité d'un arbre creux 11 monté sur l'arbre de sortie 12 du dispositif de direction. L'arbre creux porte à sa deuxième extrémité la roue centrale 13 précitée.

Le double train 14 épicycloïdal est disposé de telle sorte que le bras 15, qui porte les satellites 16 du premier train, soit relié à la couronne 17 du second train.

De même le bras 18 portant les satellites 19 du second train est relié à la couronne 20 du premier train. De cette façon, la vitesse de rotation de l'arbre porte-satellites de chaque train épicycloïdal est égale à celle de la couronne de l'autre train.

Sur la figure 1 on voit que l'arbre 21 porteur des satellites 16 du premier train et de la couronne 17 du second train est un arbre creux disposé autour de l'arbre 11 et, bien sûr, ayant le même axe de rotation que l'arbre 12.

Le double train épicycloïdal 14 coopère avec le dispositif d'immobilisation momentanée 22 au moyen de l'arbre 21 précité. En effet ce dernier porte les bagues internes de deux roues libres 23 et 24 montées en opposition de sens de blocage et appartenant au dispositif 22 d'immobilisation. Ce dernier est complété par deux freins coopérant avec les bagues extérieures des deux roues libres 23 et 24. Le dispositif 22 permet ainsi de rendre fixes la position de la couronne 17 du deuxième train épicycloïdal, et le bras 15 porte-satellites du premier train ou de rendre possible selon le fonctionnement choisi, la rotation de ceux-ci dans un sens ou dans l'autre.

La commande du blocage et du déblocage de chacun des freins 25 et 26 est fixée par la position du volant de direction du véhicule.

Le double train épicycloïdal 14 coopère avec le premier arbre de transmission 2 au moyen du dispositif à embrayages 27.

Le dispositif à embrayage 27 comprend, comme on le voit sur la figure 1, deux embrayages 31 et 32 dont les disques sont montés sur un arbre intermédiaire 28 couplé par un train d'engrenages 29, 30 au premier arbre de transmission 2. Les deux récepteurs des embrayages 31 et 32 sont liés à la roue centrale 33 du deuxième train épicycloïdal au moyen d'un arbre creux 34 concentrique à l'arbre 12 et d'un nombre respectivement pair et impair d'engrenages, ce qui permet d'entraîner dans un sens ou dans l'autre la rotation de la roue centrale du deuxième train.

Les deux embrayages 31 et 32 sont commandés par tout moyen approprié par la position du volant de commande de direction.

La position médiane de ce dernier a donc pour conséquence le desserrage simultané des deux embrayages 31 et 32 tandis que la rotation du volant dans un sens aura pour effet de serrer l'un des embrayages et que la rotation du volant dans le sens opposé aura pour effet de serrer l'autre embrayage.

Le dispositif est tel que chacun des deux embrayages ne puisse être serré que lorsque les deux parties alors accouplées (respectivement l'un des récepteurs des embrayages 31 et 32 de l'arbre 28) ont approximativement une vitesse égale.

L'arbre 12, solidaire de la couronne 20 du premier train et du porte-satellites 18 du deuxième train, constitue l'arbre de sortie de la transmission de direction et il est couplé de façon différentielle à deux épicycles de sortie 35 dont les couronnes, reliées entre elles, sont entraînées par la boîte de vitesses 38, et dont l'arbre porte-satellites entraîne les roues ou les barbotins de chenille.

Le fonctionnement du dispositif est alors le suivant.

En position neutre, le moteur thermique est en fonctionnement, l'inverseur et la boîte de vitesses 38 sont au point mort.

La pompe 6 ne tourne pas et les deux freins 25 et 26 sont serrés si le volant de commande de direction est en position médiane (position « ligne droite »). Du fait de cette position du volant, les deux embrayages 31 et 32 sont libres.

Le véhicule est alors au point mort.

Lorsqu'on enclenche l'inverseur 4, l'arbre de transmission 2 tourne dans un sens déterminé et entraîne en rotation dans le même sens la pompe 6. Le volant étant toujours en position médiane, la pompe est à débit nul et le moteur hydraulique 8 ne peut tourner.

Si la boîte de vitesses est en prise, le déplacement du véhicule est alors possible en ligne droite exclusivement et de façon entièrement mécanique.

Lorsqu'on agit sur le volant de direction, on amorce le pivotement du véhicule dans le même sens que la rotation du volant, si l'on est en marche avant et en sens opposé si l'on est en marche arrière de par la position de la pompe 6 située en aval de l'inverseur de marche 4.

Par la rotation du volant, on commande la cylindrée de la pompe 6 et le sens de circulation du fluide dans le circuit 7 de telle sorte que par passage du volant de sa position médiane à sa position en butée, la cylindrée de la pompe 6 passe de la valeur nulle à un maximum pour décroître ensuite jusqu'à la valeur nulle puis croître à nouveau avec une inversion du sens de circulation de fluide dans le circuit 7 ainsi qu'il apparaît sur la figure 3. La courbe située en bas de la figure représente un mode de variation possible de la cylindrée de la pompe. Par convention, la cylindrée négative représentera la variation de la cylindrée lorsqu'elle s'accompagne du changement de sens de circulation de fluide dans le circuit 7.

La courbe est ici indiquée à titre d'exemple, les points importants étant ceux de cylindrée nulle et maximale, la variation entre ces points étant fonction du dispositif de commande choisi dans la pratique.

La partie supérieure de la courbe montre en trait plein en regard des repères des freins 25 et 26 et des embrayages 31 et 32 les plages de serrages de ces divers éléments en fonction des variations de la cylindrée de la pompe et des mouvements de rotation du volant.

La pompe n'étant plus à cylindrée nulle, le moteur hydraulique 8 entre en rotation ainsi que la roue centrale 13 du premier train épicycloïdal. Le bras porte-satellites 15 étant immobilisé par l'un des freins 25 ou 26, la rotation de la roue centrale 13 entraîne celle du bras porte-satellites 18 du deuxième train épicycloïdal et donc celle de l'arbre de direction 12.

La rotation de ce dernier et l'existence d'un pignon inverseur 36 introduisent dans les trains épicycles de sortie 35 des rotations égales et opposées qui détermineront le pivotement par réaction sur l'arbre 37 reliant les couronnes des épicycles de sortie.

A une certaine position du volant, correspond la cylindrée maximale de la pompe 6. La cinématique du dispositif est telle qu'à cette position correspond aussi une égalisation des vitesses de l'arbre 28 et de celui des deux embrayages qui tourne dans le même sens que l'arbre 28 avec toutefois une légère avance par rapport à ce dernier.

Au-delà de cette position du volant, en accentuant sa rotation, on déclenche le serrage précité qui s'effectue donc avec le minimum de glissement ; on aura auparavant libéré le frein de celle des roues libres qui interdisait la rotation du bras 15 du premier train épicycloïdal, dans le même sens que le bras 18.

On se trouve dès cet instant en fonctionnement hydromécanique.

La roue centrale 33 du deuxième train épicycloïdal tourne alors dans le sens de l'arbre 12 alors que la roue centrale du premier train épicycloïdal tourne dans le sens opposé qui lui est imposé par le sens de rotation du moteur 8, lequel sert d'appui mobile et devient récepteur.

La vitesse de rotation de ce dernier est fixée par la cylindrée de la pompe 6. En ramenant celle-ci à sa valeur initiale progressivement et jusqu'à la valeur nulle toujours en tournant le volant de direction dans le même sens, le moteur 8 et la roue centrale 13 tendent à s'immobiliser, ce qui accélère l'arbre 12 et donc la vitesse de pivotement du véhicule.

A l'arrêté du moteur 8, qui correspond à la cylindrée nulle de la pompe 6, le pivotement s'effectue uniquement par voie mécanique ; il s'agit donc d'un point de fonctionnement où l'hydraulique ne transmet aucune puissance.

En tournant encore plus loin le volant, on ouvre à nouveau la cylindrée de la pompe 6 dans le sens opposé de celui de la séquence hydrostatique, et on se retrouve alors en fonctionnement hydromécanique.

Le régime du moteur 8 augmente avec la cylindrée de la pompe 6, et la roue centrale 13 du premier train accélère sa rotation, dans le même sens que l'arbre 12, et de nouveau la vitesse de pivotement s'accroît.

L'arrêt du pivotement est réalisé en remettant le volant dans sa position neutre quelle qu'ait été sa position précédente.

Toutes les séquences précédemment décrites s'effectuent dans l'ordre inverse avec, successivement : la libération de l'embrayage qui était en prise, le serrage du frein de la roue libre et la remise à zéro de la cylindrée de la pompe.

Le fonctionnement du dispositif en virage (évolution sur trajectoire courbe) sera le résultat de la superposition d'une translation et d'un pivotement.

Sur chacun des rapports de la boîte de vitesses 38, déterminant le rapport des vitesses des arbres 37 et 2, le rayon de virage dépendra seulement de la cylindrée momentanée de la pompe, du sens de rotation du moteur 8 du serrage des différents freins et embrayages.

De la cylindrée nulle à la cylindrée maximale, on obtient, en fonctionnement hydrostatique une gamme continue de rayons « moyens ».

De la cylindrée maximale, au retour à cylindrée nulle, avec l'assistance mécanique au moyen des embrayages 31 ou 32, on obtient, en fonctionnement hydromécanique, avec régénération, une gamme continue de rayons « courts » avec une puissance hydraulique décroissante.

De la cylindrée nulle, avec inversion de sens du moteur hydraulique, jusqu'à la cylindrée maximale, on obtiendra toujours en hydromécanique, mais en dérivation, des rayons « très courts ».

Cette dernière configuration n'est envisageable qu'à faible vitesse du véhicule.

Pour transmettre une plus forte puissance de direction le dispositif selon l'invention peut être aménagé selon un deuxième mode de réalisation dont les particularités vont être précisées ci-après, en rapport avec la figure 2.

Sur cette figure, les éléments communs aux deux modes de réalisation seront représentés par les mêmes repères, que précédemment.

Pour transmettre une forte puissance de direction, le second mode de réalisation de l'invention comprendra deux transmissions hydrauliques symétriques 5 et 5a.

Pour adapter cette exigence à l'invention, on a disposé sur chaque extrémité du premier arbre de transmission une pompe hydraulique à cylindrée variable (6 et 6a) débitant chacune dans un moteur à cylindrée fixe (respectivement 8 et 8a).

Les deux moteurs 8 et 8a sont alors reliés entre eux par un second arbre intermédiaire 46 qui transmet sa puissance hydraulique à la roue centrale 13 du premier train épicycloïdal par l'intermédiaire d'un train d'engrenage 9, 10 et de l'arbre creux 11 portant la roue centrale.

La puissance mécanique provenant du moteur thermique et transitant par les embrayages 31 et 32, est transmise au double train épicycloïdal depuis l'arbre 2 par deux trains d'engrenages, l'un contenant un nombre pair (respectivement 39, 40) et l'autre un nombre impair (respectivement 41, 42 et 43) d'engrenages. Les roues 40 et 43 sont portées par deux demi-arbres creux 44 et 45 concentriques à l'arbre 12 et supportant les disques des embrayages 31 et 32 dont les récepteurs sont également portés par deux autres demi-arbres creux concentriques à l'arbre 12 et supportant des roues centrales 33a et 33b.

En effet le deuxième train épicycloïdal est double en ce sens qu'il comprend une double roue centrale (33a et 33b), des satellites doubles (19a et 19b) portés par le bras porte-satellites 18. Le dédoublement du deuxième train permet alors une meilleure répartition des efforts sur les divers éléments le constituant.

Le double train épicycloïdal 14 coopère au moyen d'un train d'engrenages avec le dispositif 22 d'immobilisation momentanée qui est disposé pour des raisons de commodité sur un arbre creux porté par le second arbre intermédiaire 46. Cette disposition interposant un engrenage entre le double train 14 et le dispositif 22 permet d'adapter à la capacité des freins 25 et 26 et des roues libres 23 et 24 composant ce dernier, le couple important transmis par le bras porte-satellites 15.

Malgré les différences de structure apportées à ce second mode de réalisation, le mode de fonctionnement du dispositif selon l'invention reste inchangé.

Les avantages présentés par l'invention sont nombreux. Parmi ceux-ci on peut citer le fait que le dispositif conserve toute la souplesse d'une direction hydrostatique, tout en ne faisant transiter dans les éléments hydrauliques que la moitié au plus de la puissance nécessaire au virage, quelle que soit l'importance de celle-ci.

En outre, de par la disposition particulière de la pompe 6 en aval de l'inverseur de marche arrière, les réflexes normaux de conduite sont respectés en marche arrière.

De plus le couplage des éléments mécaniques s'effectue sous charge, sans à-coups, de façon automatique de par la présence des roues libres et sans glissement, ce qui évite les gaspillages de puissance et donc améliore le rendement par comparaison avec les dispositifs de l'art antérieur.

Ces avantages rendent l'invention utilisable pour tous les véhicules de terrain, tels qu'engins de chantier, chars de combats pour lesquels il est important d'obtenir une bonne mobilité.

**Revendications**

1. Dispositif de direction hydromécanique pour véhicule à chenilles ou à roues non orientables permettant, en charge, le passage continu et sans à-coups d'un fonctionnement hydraulique à un fonctionnement hydromécanique entraîné par un moteur thermique (1) relié à un premier arbre de transmission (2) commandant le sens de rotation d'une boîte de vitesses et le fonctionnement d'une transmission hydrostatique (5), dispositif comprenant un double train réducteur (14) composé de deux trains épicycloïdaux, la roue centrale (13) du premier train épicycloïdal coopérant avec le récepteur hydrostatique, le bras porte-satellite du deuxième train (18) coopérant avec un arbre de sortie, caractérisé en ce que les deux trains épicycloïdaux sont réunis de sorte que le bras porte-satellite (respectivement 15, 18) de chacun d'eux soit relié à la couronne (respectivement 17, 20) de l'autre, en ce que la roue centrale (33) du deuxième train épicycloïdal coopère au moyen d'un dispositif à embrayages (27) avec le premier arbre de commande (2) du sens de rotation de la boîte de vitesses et en ce que l'arbre (21) portant les bras porte-satellites du premier train épicycloïdal et la couronne (17) du second train épicycloïdal est muni d'un dispositif d'immobilisation momentanée (22).

2. Dispositif de direction hydromécanique selon la revendication 1, caractérisé en ce que le dispositif d'immobilisation momentanée (22) est constitué par deux roues libres (23, 24) montées en opposition de sens de blocage, coopérant avec des moyens d'immobilisation (25, 26).

3. Dispositif de direction hydromécanique selon la revendication 2 caractérisé en ce que les moyens d'immobilisation sont constitués par deux freins (25, 26) à commande mécanique hydraulique ou électromagnétique.

4. Dispositif de direction hydromécanique selon l'une quelconque des revendications 1 à 3 caractérisé en ce que la transmission hydrostatique (5) comporte au moins un circuit hydraulique comprenant une ou plusieurs pompes (6) et un ou plusieurs moteurs hydrauliques (8), la cylindrée de chacun de ces éléments pouvant être fixe ou variable chaque pompe étant entraînée par le premier arbre de transmission (2) et l'arbre de sortie de chaque moteur entraînant la roue centrale (13) du premier train épicycloïdal par l'intermédiaire d'un train à engrenages (9, 10).

5. Dispositif de direction hydromécanique selon la revendication 4, caractérisé en ce que la variation de cylindrée de chaque élément à cylindrée variable est commandée par le volant de direction du véhicule.

6. Dispositif de direction hydromécanique selon l'une quelconque des revendications 1 à 5, caractérisé en ce que le dispositif à embrayages (27) est composé par un arbre intermédiaire (28) portant un pignon (30) le reliant au premier arbre de transmission (2) et deux ensembles de disques et par deux récepteurs d'embrayages (31, 32), ces deux embrayages pouvant être commandés indépendamment l'un de l'autre, les deux arbres accouplés par le dispositif à embrayages ayant sensiblement la même vitesse de rotation au moment de l'accouplement.

7. Dispositif de direction hydromécanique selon la revendication 6, caractérisé en ce que chaque récepteur d'embrayage (31, 32) est relié à l'arbre (34) portant la roue centrale (33) du deuxième train épicycloïdal, le premier récepteur y étant relié par un nombre pair et le second par un nombre impair d'engrenages intermédiaires.

8. Dispositif de direction hydromécanique selon l'une quelconque des revendications 2 à 7, caractérisé en ce que les roues libres (23, 24) montées en opposition sont composées de deux bagues internes disposées sur l'arbre (21) portant les bras porte-satellites du premier train épicycloïdal et la couronne du second train épicycloïdal et de deux bagues externes coopérant avec les moyens d'immobilisation (25, 26).

9. Dispositif de direction hydromécanique pour forte puissance de direction selon l'une quelconque des revendications 4 ou 5, caractérisé en ce que la transmission hydrostatique comporte deux circuits hydrauliques identiques (5, 5a), chacun des pompes (6, 6a) étant entraînée par le premier arbre de transmission (2) qui porte de plus deux roues dentées (39, 41) et chaque moteur (8, 8a) entraînant chacune des extrémités d'un second arbre intermédiaire (46) qui conduit la roue centrale (13) du premier train épicycloïdal par l'intermédiaire d'un train à engrenages.

10. Dispositif de direction hydromécanique pour forte puissance de direction selon la revendication 9, caractérisé en ce que le deuxième train épicycloïdal comporte un satellite (19) double relié à deux roues centrales (33a, 33b), chacune de ces roues centrales entraînant un arbre qui porte à chacune de ces extrémités un récepteur d'embrayage (31, 32).

11. Dispositif de direction hydromécanique pour forte puissance de direction selon la revendication 10, caractérisé en ce que chaque ensemble de disques d'embrayage est porté par un demi-arbre creux (44, 45) entraîné en rotation par chaque roue dentée (41, 39) du premier arbre de transmission (2), le premier et le second demi-arbre étant entraînés respectivement au moyen d'un nombre pair et d'un nombre impair d'engrenages intermédiaires.

12. Dispositif de direction hydromécanique pour forte puissance de direction selon l'une quelconque des revendications 9 à 11, caractérisé en ce que la couronne (17) du second train épicycloïdal coopère au moyen d'un train d'engrenages avec le dispositif d'immobilisation momentanée (22).

13. Dispositif de direction hydromécanique pour forte puissance de direction selon la revendication 12 caractérisé en ce que le dispositif d'immobilisation momentanée (22) est porté par un arbre creux concentrique avec le second arbre intermédiaire (46).

14. Dispositif de direction hydromécanique selon l'une quelconque des revendications 1 à 13 caractérisé en ce que l'arbre (12) portant la grande couronne (20) du premier train épicycloïdal entraîne dans des sens opposés les roues centrales de deux épicycles de sortie (35) dont les couronnes coopèrent avec la boîte de vitesse et dont les bras porte-satellites entraînent les roues motrices.

15. Dispositif de direction hydromécanique selon l'une quelconque des revendications 1 à 14 dont le premier arbre de transmission est relié au moteur thermique (1) du véhicule par un inverseur (4), caractérisé en ce que la pompe (6, 6a) de chaque transmission hydrostatique est entraînée en rotation en aval de l'inverseur (4) de sorte que le virage du véhicule soit effectué dans le sens de rotation du volant, en marche avant et dans le sens opposé en marche arrière, sur la même trajectoire.

## Claims

1. A device for hydromechanical steering for tracked vehicles or vehicles with non-swivelling wheels designed for passing uninterruptedly and without jerks, when under load, from hydraulic operation to hydromechanical operation, driven by an IC engine (1) connected to a first transmission shaft (2) controlling the direction of a gear box and the operation of a hydrostatic transmission system (5), device comprising a double reduction train (14) consistin of two epicyclic gear trains, the central gear wheel (13) of the first epicyclic train meshing with the hydraulic receiver, the planet-wheel arm of the second train (18) meshing with an output shaft, characterised by the fact that the two epicyclic trains are joined so that the planet-weheel arm (respectively 15, 18) of each of them is connected to the crown wheel (respectively 17, 20) of the other, by the fact that the central gear wheel (33) of the second epicyclic train meshes with the first control shaft (2) by means of a clutch device (27), in the direction of rotation of the gear box and by the fact that the shaft (21) that carries the planet-wheel arms of the first epicyclic train and the crown wheel (17) of the second epicyclic train is fitted with a momentary immobilisation device (22).

2. A device for hydromechanical steering is accordance with claim 1, characterised by the fact that the momentary immobilisation device (22) consists of two idler wheels (23, 24) fitted in opposition to the direction of locking, that mesh with means of immobilisation (25, 26).

3. A device for hydromechanical steering in accordance with claim 2, characterised by the fact that the immobilisation means consist of two brakes (25, 26) that are mechanically, hydraulically or electro-magnetically operated.

4. A device for hydromechanical steering in accordance with any one of claims 1 to 3, characterised by the fact that the hydrostatic transmission (5) consists of at least one hydraulic circuit comprising one or several pumps (6) and one or several hydraulic motors (8), the cylinder capacity of each of these components may be fixed or variable, each pump being driven by the first transmission shaft (2) and the output shaft of each motor driving the central wheel (13) of the first epicyclic train by means of a gear train (9, 10).

5. A device for hydromechanical steering in accordance with claim 4, characterised by the fact that the variation of cylinder capacity of each component of variable cylinder capacity is controlled by the steering wheel of the vehicle.

6. A device for hydromechanical steering in accordance with any one of claims 1 to 5, characterised by the fact that clutch device (27) consists of an intermediate shaft (28) carrying a pinion (30) that connects it to the first transmission shaft (2) and two disc assemblies and by two clutch receivers (31, 32) these two set clutches being controlled separately, the two shafts coupled by a clutch device rotating at practically the same speed at the moment of coupling.

7. A device for hydromechanical steering in accordance with claim 6, characterised by the fact that each clutch receiver (31, 32) is connected to shaft (34) that carries the central wheel (33) of the second epicyclic train, the first receiver being connected to it by an even number and the second by an odd number of intermediate gears.

8. A device hydromechanical steering in accordance with one of claims 2 to 7, characterised by the fact that the idler wheels (23, 24) fitted in opposition consists of two inner rings placed on the shaft (21) carrying the planet-wheel arms of the first epicyclic train and the crown wheel of the second epicyclic train and of two outer rings that mesh with the immobilisation means (25, 26).

9. A device for hydromechanical steering providing great steering power in accordance with either of claims 4 or 5, characterised by the fact that the hydrostatic transmission system comprises two identical hydraulic circuits (5, 5a) each of pumps (6, 6a) being driven by the first transmission shaft (2) that also bears two toothed wheels (39, 41) and each motor (8, 8a), driving one end of a second intermediate shaft (46) that drives the central wheel (13) of the first epicyclic train by means of a gear train.

10. A device for hydromechanical steering providing great steering power in accordance with claim 9, characterised by the fact that the second epicyclic train carries a double planet-wheel (19) connected to two central wheels (33a, 33b) each of which central wheels drives a shaft that carries a clutch receiver (31, 32) at each of its ends.

11. A device for hydromechanical steering providing great steering power in accordance with claim 10, characterised by the fact that each clutch disc assembly is held on a hollow half-shaft (44, 45) which is rotated by each toothed wheel (41, 39), of the first transmission shaft (2), the first and the second half shaft being driven respectively by means of an odd number and an even number of intermediate gears.

12. A device for hydromechanical steering providing great steering power in accordance with any one of claims 9 to 11, characterised by the fact that the crown wheel (17) of the second epicyclic train meshes with the momentary immobilisation device by means of a gear train (22).

13. A device for hydromechanical steering providing great steering power in accordance with claim 12, characterised by the fact that the momentary immobilisation device (22) is carried by a hollow shaft concentric with the second intermediate shaft (46).

14. A device for hydromechanical steering in accordance with any one of claims 1 to 13, characterised by the fact that the shaft (12) that carries the big crown wheel (20) of the first epicyclic train drives, in opposite directions, the central wheels of the two output epicycles of which the crown wheels mesh with the gear box and of which the planet-wheel arms drive the drive wheels.

15. A device for hydromechanical steering in accordance with any one of claims 1 to 14 of which the first transmission shaft is connected to the IC engine (1) of the vehicle by an inverser (4), characterised by the fact that the pump (6, 6a) of each hydrostatic transmission system is driven downstream of the inverser (4) so that the vehicle turns in the direction in which the steering wheel is turned when running forwards and in the opposite direction when running in reverse, over the same trajectory.

**Ansprüche**

1. Hydraulisch-mechanisches Fahr- und Lenkgetriebe für Kettenfahrzeuge bzw. für Radfahrzeuge ohne lenkbare Räder, welches den stetigen und stoßfrein Übergang von einer rein hydraulischen Arbeitsweise auf eine hydraulisch-mechanische Arbeitsweise ermöglicht, wobei das Getriebe von einem Verbrennungsmotor (1) angetrieben wird, der mit einer ersten Antriebswelle (2) verbunden ist, welche die Drehrichtung eines Schaltgetriebes bestimmt und ein hydrostatisches Getriebe antreibt, und das Lenkgetriebe ein doppeltes Reduziergetriebe (14) umfaßt, das von zwei mit einander gekoppelten Planetengetrieben gebildet wird, wobei das Sonnenrad (13) des ersten Planetengetriebe mit dem hydrostatischen Motor verbunden ist, während der Planetenradträger (18) des zweiten Planetengetriebes mit einer Abtriebswelle verbunden ist, dadurch ge-kennzeichnet, daß die beiden Planetenradgetrie-be derart mit einander verbunden sind, daß der Planetenradträger dieser beiden Getriebe (15 bzw. 18) je mit dem Zahnkranz (17 bzw. 20) des anderen fest verbunden ist, daß das Sonnenrad (33) des zweiten Planetenradgetriebes über eine Kupplungsvorrichtung (27) mit der ersten Antriebswelle (2), welche die Drehrichtung des Schaltgetriebes bestimmt, verbunden ist, und daß die Welle (21), welche den Planetenradträger (15) des ersten Planetenradgetriebes und den Zahnkranz (17) des 2. Planetenradgetriebes trägt, mit einer lösbaren Feststellvorrichtung (22) versehen ist.

2. Hydraulisch-mechanische Fahr- und Lenkgetriebe gemäß Anspruch 1, dadurch gekennzeichnet, daß die lösbare Feststellvorrichtung (22) von zwei gegensinnig wirkenden Frei-laufvorrichtungen (23, 24) gebildet wird, welche mit den Feststellvorrichtungen (25, 26) zusammenwirken.

3. Hydraulisch-mechanisches Fahr- und Lenkgetriebe gemäß Anspruch 2, dadurch gekennzeichnet, daß die o.a. Feststellvorrichtungen von zwei mechanisch, hydraulisch oder elektromagnetisch betätigten Bremsen (25, 26) gebildet werden.

4. Hydraulisch-mechanisches Fahr- und Lenkgetriebe gemäß den Ansprüchen 1 bis 3, dadurch gekennzeichnet, daß das hydrostatische Getriebe (5) wenigstens einen Kreislauf umfaßt, mit einer bzw. mehreren Pumpen (6) und einem bzw. mehreren Hydromotoren (8), wobei das Schluckvolumen dieser Pumpen und Motoren fest oder einstellbar sein kann, und jede Pumpe von der ersten Antriebswelle (2) angetrieben wird, während die Antriebswelle des bzw. der Motoren das Sonnenrad (13) des ersten Planetenradgetribes über ein Zahnradgetriebe (9, 10) antreibt.

5. Hydraulisch-mechanisches Fahr- und Lenkgetriebe gemäß Anspruch 4 dadurch gekennzeichnet, daß das Schluckvolumen der Pumpen bzw. Motoren mit Hilfe des Steuerrades des Fahrzeuges eingestellt wird.

6. Hydraulisch-mechanisches Fahr- und Lenkgetriebe gemäß einem der Ansprüche 1 bis 5, dadurch gekennzeichnet, daß die Kupplungsvorrichtung (27) von einer Zwischenwelle (28) gebildet wird, welche ein Zahnrad (30) trägt, und so die Verbindung mit der Antriebswelle (2) herstellt, sowie auch zwei Kupplungsscheiben, die mit zwei Kupplunsgehäusen (31, 32) gekuppelt werden können, wobei die beiden Kupplungen getrennt betätigt, d.h. ein- bzw. ausgerückt werden können und beim Einrücken die gekuppelten Wellen etwa dieselbe Drehzahl aufweisen.

7. Hydraulisch-mechanisches Fahr- und Lenkgetriebe gemäß Anspruch 6 dadurch gekennzeichnet, daß beide Kupplungen (31, 32) mit der Welle (34) verbunden sind, welche das Sonnenrad (33) des zweiten Planetenradgetriebes trägt, wobei die Verbindung mit der ersten Kupplung über eine gerade Anzahl von Zwischenrädern und die mit der zweiten Kupplung über eine ungerade Anzahl von Zwischenrädern erfolgt.

8. Hydraulisch-mechanisches Fahr- und Lenkgetriebe gemäß eines der Ansprüche 2 bis 7 dadurch gekennzeichnet, daß die gegensinnig wirkenden Freilaufvorrichtungen (23, 24) von zwei Innenringen gebildet werden, die auf der Welle (21) angeordnet sind, welche den Planetenradträger des ersten Planetenradgetriebes und den Zahnkranz des zweiten Planetenradgetriebes trägt, sowie von zwei Außenringen, welche mit den Feststellvorrichtungen (25, 26) zusammenwirken.

9. Hydraulisch-mechanisches Fahr- und Lenkgetriebe großer Lenkleistung gemäß eines der Ansprüche 4 oder 5, dadurch gekennzeichnet, daß das hydrostatische Getriebe zwei getrennte genau gleiche hydraulische Kreise (5, 5a) umfaßt, wobei die beiden Pumpen (6, 6a) von der ersten Antriebswelle (2) angetrieben werden, welche außerdem zwei Zahnräder (39, 41) trägt, und daß die beiden Hydromotoren (8, 8a) je ein Ende einer zweiten Zwischenwelle (46) antreiben, welche das Sonnenrad (13) des ersten Planetenradgetriebes über ein Zahnradgetriebe antreibt.

10. Hydraulisch-mechanisches Fahr- und Lenkgetriebe großer Lenkleistung gemäß Anspruch 9, dadurch gekennzeichnet, daß das zweite Planetenradgetriebe dopplete Planetenräder (19) umfaßt, welche je mit zwei Sonnenräder (33a, 33b) kämmen, wobei diese Sonnenräder je eine Welle antreiben, die an ihrem äußeren Ende ein Kupplungsgehäuse (31, 32) tragen.

11. Hydraulisch-mechanisches Fahr- und Lenkgetriebe großer Lenkleistung gemäß Anspruch 10, dadurch gekennzeichnet, daß die Kupplungsschein je von einer halben Hohlwelle (44, 45) getragen werden, die je von einem Zahnrad (41, 39) auf der ersten Antriebswelle (2) angetrieben werden, wobei die erste halbe Hohlwelle über eine gerade Anzahl von Zwischenrädern und die Zweite über eine ungerade Anzahl von Zwischenrädern angetrieben wird.

12. Hydraulisch-mechanisches Fahr- und Lenkgetriebe großer Lenkleistung gemäß eines der Ansprüche 9 bis 11, dadurch gekennzeichnet, daß der Zahnkranz (17) des zweiten. Planetenradgetriebes über ein Zahnradgetriebe mit der lösbaren Feststellvorrichtung zusammenwirkt.

13. Hydraulisch-mechanisches Fahr- und Lenkgetriebe großer Lenkleistung dadurch gekennzeichnet, daß die lösbare Feststellvorrichtung (22) von einer Hohlwelle getragen wird, die konzentrisch auf der zweiten. Zwischenwelle (46) sitzt.

14. Hydraulisch-mechanisches Fahr- und Lenkgetriebe gemäß eines der Ansprüche 1 bis 13, dadurch gekennzeichnet, daß die Welle (12), welche den Zahnkranz (20) des ersten Planetenradgetriebes trägt, die Sonnenräder der beiden Abtriebs-Planetengetriebe (35) gegensinnig antreibt, während die Zahnkränze dieser Abtriebsgetriebe mit dem Schaltgetriebe zusammenwirken und die Planetenradträger die Antriebsräder des Fahrzeuges antreiben.

15. Hydraulisch-mechanisches Fahr- und Lenkgetriebe gemäß eines der Ansprüche 1 bis 14, bei dem die erste Antriebswelle (2) mit dem Verbrennungsmotor (1) über ein Umschaltgetriebe (4) angetrieben wird, dadurch gekennzeichnet, daß die Pumpen (6, 6a) des hydrostatischen Getriebes nach dem Umschaltgetriebe (4) angeschlossen sind, sodaß beim Vorwärtsfahren die Schwenkbewegung des Fahrzeuges in Richtung der Drehbewegung des Steuerrades erfolgt, während beim Rückwärtsfahren die Schwenkbewegung in entgegengesetzter Richtung gemäß derselben Kurvenbahn erfolgt.

Figure: 1

**0 014 122**

Figure: 2

Figure: 3

0 014 122